# EUROPÄISCHE PATENTSCHRIFT

(11) **EP 0 799 417 B1**
(45) Veröffentlichungstag und Bekanntmachung des Hinweises auf die Patenterteilung: **03.07.2002**
(21) Anmeldenummer: 95936960.4
(22) Anmeldetag: 23.11.1995
(51) Int. Cl.: G01N 27/12

(54) **SENSOR ZUM NACHWEIS VON BRENNBAREN GASEN**
SENSOR FOR DETECTING FLAMMABLE GASES
DETECTEUR PERMETTANT DE DETECTER DES GAZ INFLAMMABLES

(30) Priorität: 20.12.1994 DE 4445359
(43) Veröffentlichungstag der Anmeldung: 08.10.1997
(73) Patentinhaber: ROBERT BOSCH GMBH, 70442 Stuttgart (DE)
(72) Erfinder: POTTHAST, Heidrun, D-70825 Korntal-Münchingen (DE); SCHUMANN, Bernd, D-71277 Rutesheim (DE)
(86) Internationale Anmeldenummer: DE9501641
(87) Internationale Veröffentlichungsnummer: WO9619725

(56) Entgegenhaltungen:
- GB-A- 2 248 306
- US-A- 4 358 951
- DATABASE WPI Week 8216 Derwent Publications Ltd., London, GB; AN 8232128 & JP,A,57 044 846 (MATSUSHITA ELEC WORKS) , 13.März 1982

## Beschreibung

### Stand der Technik

Die Erfindung betrifft einen Sensor zum Nachweis von brennbaren Gasen nach der Gattung des Anspruchs 1 sowie ein Verfahren zur Herstellung einer sensitiven Schicht nach der Gattung des unabhängigen Anspruchs 1. Es ist bekannt, zur Bestimmung von spezifischen Komponenten eines Prüfgases Sensoren zu verwenden, deren sensitives Element ein Halbleitermaterial ist, dessen elektrischer Widerstand sich bei Berührung mit der spezifischen Gaskomponente verändert. Verwendung finden Sensoren dieser Art insbesondere zur Bestimmung des Sauerstoffgehaltes in Abgasen, zum Beispiel aus Brennkraftmaschinen, aber auch zur Bestimmung von Methan, Kohlenmonoxid oder Alkohol. Als Halbleitermaterialien werden insbesondere halbleitende Metalloxide, wie Zinnoxid (SnO₂), Zinkoxid (CnO), Titanoxid (TiO₂) oder Wolframoxid (WO₃) je nach Zweck eingesetzt. Hergestellt werden diese bekannten Sensoren üblicherweise in Dick- oder Dünnschichttechnik. Auf ein isolierendes, vorzugsweise keramisches Substrat, etwa aus Aluminiumoxid (Al₂O₃) werden Leiterbahnen, mittels derer später die Widerstandsänderung bestimmt wird, sowie das halbleitende Metalloxid aufgebracht. Um einerseits die Empfindlichkeit des Sensors - sie ist temperaturabhängig - zu erhöhen, und andererseits die Aufrechterhaltung des thermodynamischen Gleichgewichts von Adsorption und Desorption zu gewährleisten, ist es üblich, das Substrat mit der Sensoranordnung zu beheizen. Hierzu erforderliche Heizeinrichtungen sind nach bekannten Vorschlägen zum Beispiel auf der Unterseite des Substrats angeordnet - wobei sich an der Oberseite die Sensoranordnung befindet - oder sie können in das Substrat integriert oder zwischen Substrat-Oberfläche und Sensoranordnung angeordnet sein. Bekannt ist ein Sensor dieser Art zum Beispiel aus der EP-OS 313 390. Der daraus entnehmbare Sensor weist ein Substrat auf Aluminiumoxid (Al₂O₃) auf, auf das von einer Seite her sowohl Heizungseinrichtung als auch Sensoranordnung aufgebracht sind. Als halbleitendes Material wird Zinnoxid (SnO₂) zum Nachweis von Metangas, Wolframoxid (WO₃) zum Nachweis von Kohlenmonoxid oder Lantan-Nickeloxid (LaNiO₃) zur Detektion von Alkohol vorgeschlagen.

Ein ähnlicher Sensor, bei welchem die Heizeinrichtung in ein Substrat aus Aluminiumoxid (Al₂O₃) integriert ist, ist aus der DE-OS 36 24 217 bekannt. Die gassensitive Halbleiterschicht besteht bei diesem Sensor aus einem porösen Titandioxid (TiO₂), welches mit einem weiteren Metalloxid angereichert ist. Der beschriebene Sensor ist insbesondere zur Regelung des Luft-/Brennstoffverhältnisses in einem Abgas durch Messung des Sauerstoffgehaltes vorgesehen.

Aus der US 4,358,951 ist weiterhin ein Sensor zum Nachweis der Konzentration einer Gaskomponente in einem Gas bekannt, der ein Substrat aus Aluminiumoxid aufweist, auf dem ein dünner, durchgehender Zinkoxidfilm aufgebracht ist. Die Oberfläche des Zinkoxidfilms wird mit einer Vielzahl von Palladium-Gold-Inseln versehen.

Diese bekannten Sensoren auf Halbleiteroxidbasis haben sich zur Erfassung von brennbaren Gasen wie Kohlenmonoxid (CO), Wasserstoff (H₂) und Kohlenwasserstoffen praktisch bewährt.

Alle bekannten Sensoren neigen jedoch zu einer Querempfindlichkeit gegenüber Stickoxiden, wie sie beispielsweise in der Gasatmospäre bei Verbrennungsprozessen oder in Autoabgasen auftreten. Bei Anwendung in stickoxidhaltigen Prüfgasen liefern die bekannten Sensoren deshalb ungenaue Ergebnisse oder bedürfen besonderer Korrektureinrichtungen.

Aufgabe der Erfindung ist es, einen Sensor sowie ein Verfahren zur Herstellung einer sensitiven Schicht anzugeben, welcher auch in Prüfgasen mit Stickoxidanteil eine hinreichend gute Bestimmung des Anteils an brennbaren Gasen gestattet.

Diese Aufgabe wird gelöst durch einen Sensor beziehungsweise einem Verfahren zur Herstellung einer sensitiven Schicht gemäß den Merkmalen der unabhängigen Ansprüche 1 und 10. Der erfindungsgemäße Sensor ist mit grundsätzlich bekannten Techniken und dadurch kostengünstig herstellbar. Er reagiert schnell und mit guter Empfindlichkeit auf in einem Prüfgas enthaltene brennbare Gase, ohne von gleichzeitig vorhandenen Stickoxidbestandteilen im Prüfgas beeinflußt zu werden. Er eignet sich deshalb gleichermaßen für den Einsatz in Kraftfahrzeugen, etwa zur Steuerung der Innenraumbelüftung, deren Unterbrechung er gegebenenfalls veranlaßt, wenn Autoabgase in den Innenraum gelangen, wie zur Messung von brennbaren Gasen in geringen Konzentrationen in Luft oder in Abgasen von Feuerungen oder Verbrennungsmaschinen.

Vorteilhafte Weiterbildungen und zweckmäßige Ausgestaltungen des erfindungsgemäßen Sensors beziehungsweise des Verfahrens zu seiner Herstellung ergeben sich aus den Unteransprüchen.

Durch Dotierung des für die sensitive Schicht verwendeten halbleitenden Oxids mit Palladium (Pd) können Empfindlichkeit und Schnelligkeit des Sensors im Hinblick auf die vorgegebene Verwendung eingestellt werden.

Seine gute Wirkungsweise erhält der vorgeschlagene Sensor durch die erfindungsgemäße Beschichtung des sensitiven Halbleiteroxids mit Gold oder einer Goldlegierung. Sie verhindert die Adsorption der in dem Prüfgas vorkommenden Stickoxide. Der Sensor kann dadurch niedrige Konzentrationen von brennbaren Gasen, wie sie etwa im Straßenverkehr üblich sind, bei einem stabilen Grundwiderstand detektieren, ohne daß es zu einer dauerhaften Erhöhung des Widerstands oder einer Drift kommt, wenn stickoxidhaltige Gase auf den Sensor treffen.

Gut geeignet ist der vorgeschlagene Sensor desweiteren zur summarischen Bestimmung des Gehaltes von brennbaren Gasen im Abgas von Feuerungsanlagen in Abhängigkeit von dessen Sauerstoffgehalt.

Vorteilhaft ist es, dem als Grundmaterial für die sensitive Schicht verwendeten Metalloxid ein die Leitfähigkeit erhöhendes Oxid, beispielsweise Tantaloxid beizumischen. Eine weitere vorteilhafte Verbesserung der Sensorwirkung wird durch Dotierung des Grundmaterials mit einem als Diffusionssperre wirkenden Material, insbesondere Paladium, erreicht. Vorteilhaft ist es ferner, dem Grundmaterial der sensitiven Schicht ein zweiwertiges oder dreiwertiges Element der Erdalkali oder der seltenen Erden, beispielsweise Magnesiumoxid beizumischen, um ein zu starkes Zusammensintern des in Form von Körnern vorliegenden Metalloxids zu verhindern.

Als halbleitendes Metalloxid wird vorzugsweise Zinnoxid verwendet.

Nachfolgend werden der vorgeschlagene Sensor sowie das Verfahren zur Herstellung einer sensitiven Schicht anhand der in der Zeichnung dargestellten Ausführungsbeispiele näher erläutert.

Es zeigen Figuren 1 bis 3 Stadien der Herstellung eines Sensors in Draufsicht, Figur 4 eine Seitenansicht des Sensors, Figur 5 eine Ansicht des Sensors von der Unterseite, Figur 6 einen vergrößerten Ausschnitt der sensitiven Halbleiterschicht vor dem Sintern, Figur 7 einen Ausschnitt der sensitiven Halbleiterschicht nach dem Sintern.

### Beschreibung

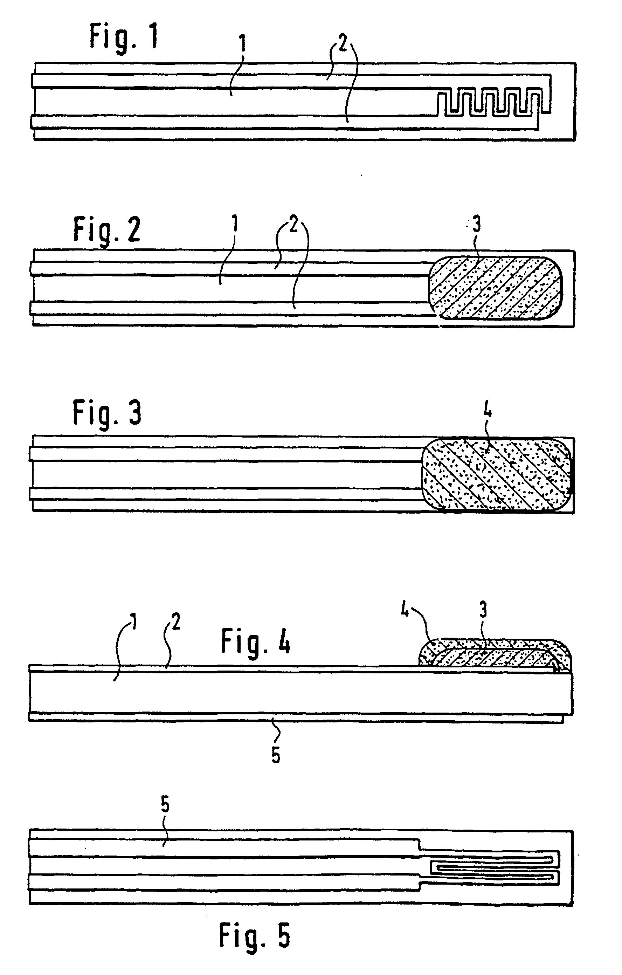

Figur 1 zeigt in Draufsicht einen Sensor, der stäbchenförmig ausgeführt wurde. Grundlage des Sensors ist ein Substrat 1 aus einem elektrisch isolierenden und wärmebeständigen Material, vorzugsweise Aluminiumoxid (Al₂O₃), auf welches in Dick-/oder Dünnschichttechnik die weiteren, den Sensor bildenden Bestandteile aufgebracht sind. Auf einer, nachfolgend als Oberseite bezeichneten Oberfläche des Substrates 1 sind zunächst zwei Leiterbahnen 2 aufgebracht, welche an ihren Kopfenden kammartig ineinander verzahnt sind.

Im Bereich der verzahnten Enden ist über die Leiterbahnen 2 in einer Schichtdicke von 5 bis 100 µm, vorzugsweise 20 bis 50 µm eine sensitive, halbleitende Metalloxidschicht 3 aufgebracht, Figur 2. Bei dem Metalloxid handelt es sich zweckmäßig um Zinnoxid (SnO₂), alternativ möglich sind auch Indiumoxid (In₂O₃), Titanoxid (TiO₂) oder ein anderes n-halbleitendes Metalloxid beziehungsweise Metallmischoxid, welchem in einer Konzentration von 0,001 bis 0,5 Mol.%, vorzugsweise 0,005 bis 0,015 Mol.%, ein die Leitfähigkeit erhöhendes Dotierungselement zugesetzt ist. Als Dotierungselement wird bei Verwendung von Zinnoxid (SnO₂) Tantal (Ta₂O₅), Nioboxid (Nb₂O₅), Mischungen hiervon, Antimon oder Wolfram-Oxide, bei Verwendung von Indiumoxid (In₂O₃) auch Zinn-, Titan- oder Cer-Oxide verwendet. Die Metalloxidschicht 3 ist weiterhin homogen mit einem Edelmetallzusatz dotiert. Vorzugsweise besteht er aus Paladium (Pd) in einer Konzentration von 0,5 bis 3 Mol.%, insbesondere 1,2 Mol.%, welches das Eindiffundieren der nachfolgend aufgebrachten Goldummantelung in das Metalloxid einschränkt. Daneben kann der Edelmetallzusatz noch Anteile von Platin (Pt) und/oder Rhodium (Rh) in einer Konzentration von 0,001 bis 0,3 Mol.% beinhalten, welche die Ansprechgeschwindigkeit des Sensors beeinflussen. Desweiteren kann das Metalloxid der Schicht 3 Zusätze zur Einschränkung des Kristallitwachstums nach Abschluß des Herstellungsvorgangs, insbesondere zur Verhinderung des weiteren Zusammensinterns des zunächst in Form von Körnern vorliegenden Halbleiteroxids, und damit zur Verbesserung der Alterungsbeständigkeit der Sensoren, enthalten. Geeignete Zusätze sind die Oxide zweiwertiger Elemente, beispielsweise Magnesium (Mg), Barium (Ba), Calzium (Ca), Strontium (Sr), Zink (Zn) oder ein dreiwertiges Element wie etwa Aluminium als Oxid (Al₂O₃) in Konzentrationen von 0,01 bis 0,3 Mol.%.

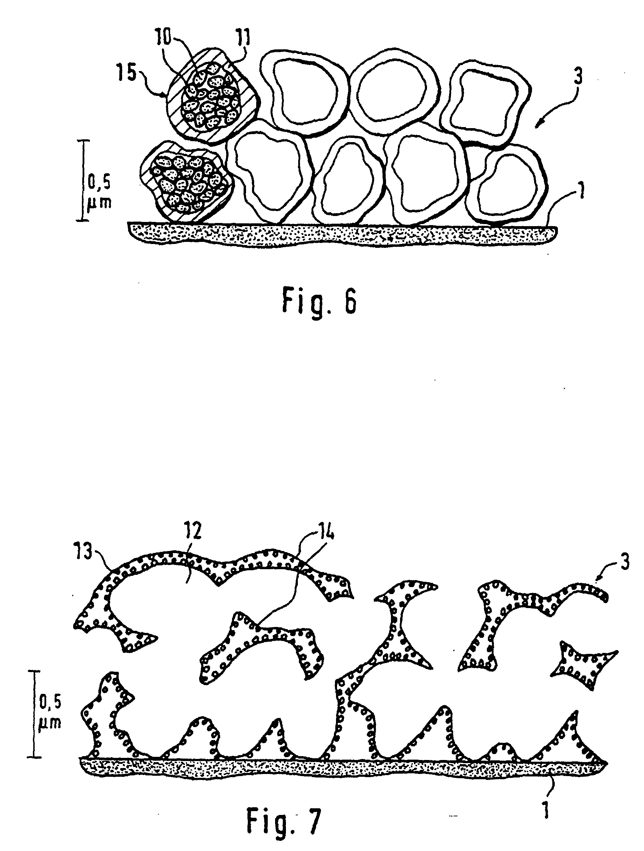

Weiterer Bestandteil der Metalloxidschicht 3 ist in einer Konzentration von 0,3 bis 3 Mol.%, vorzugsweise etwa 0,6 Mol.% Gold (Au) oder eine Legierung aus Gold und einem oder mehreren Edelmetallen der Gruppe Paladium (Pd), Platin (Pt), Rhodium (Rh), Iridium (IR), Osmium (OS) oder Silber. Das Gold beziehungsweise die Goldlegierung ist nicht homogen mit den anderen Bestandteilen der Metalloxidschicht 3 vermischt, sondern so eingebracht, daß es, wie in Figur 7 dargestellt, eine Oberflächenbeschichtung 14 für aus dem dotierten Metalloxid aufgebaute Strukturverbände 12 bildet. Letztere entstehen während der Herstellung durch Zusammensinterung eines zunächst in Form von Körnern 15, wie in Figur 6 angedeutet, vorliegenden Grundmaterials. Die von dem mit einer Goldlegierung oberflächenbeschichteten Metalloxid gebildete, schwammartige Struktur der sensitiven Schicht 3, wie sie in Figur 7 wiedergegeben ist, ist verantwortlich für die angestrebte Querunempfindlichkeit des Sensors gegen Stickoxide. Sie bildet ein wesentliches Merkmal des erfindungsgemäßen Sensors.

Wie aus den Figuren 3 bis 5 ersichtlich ist kann über die Metalloxidschicht 3 zweckmäßig in einer Stärke von etwa 10 bis 100 µm eine poröse Schutzschicht 4 aufgebracht werden. Vorzugsweise besteht sie aus Aluminiumoxid (Al₂O₃), Titanoxid (TiO₂), Zirkoniumoxid (ZrO₂) oder Siliciumdioxid (SiO₂). Auf der gegenüberliegenden Seite des Substrats 1, das heißt der Unterseite, befindet sich eine Heizungsanordnung 5, welche in Figur 5 in Draufsicht wiedergegeben ist. Sie besteht aus einer im Bereich unterhalb des sensitiven Bereichs des Sensors mäanderförmigen Leiterbahn.

Ein Verfahren zur Herstellung einer Metalloxid-Schicht mit einer Figur 7 entsprechenden, schwammartigen Struktur ist nachfolgend beschrieben. Alle Mengenangaben sind auf einen Ansatz von einem Mol Zinnoxid bezogen.

Im einleitenden Verfahrensschritt werden ein Mol Zinntetrachlorid (SnCl₄) zusammen mit 0,02 Mol.% Tantal V-Chlorid (TaCl₅) in 500 ml Salzsäure (HCl) gegeben. Die Mischung wird in 30 1 Wasser gelöst. Aus der wässrigen Mischung wird nun durch Zugabe von Amoniak (NH₃) Zinnoxid (SnO₂) ausgefällt. Das ausgefällte Produkt wird sodann mehrfach, zweckmäßig wenigstens dreimal, durch Sedimentation gewaschen. Unter Zusatz von 1,2 Mol% Palladiumnitrat und 0,1 Mol% Magnesiumnitrat wird das erhaltene Sediment in 300 ml Wasser gelöst und nachfolgend getrocknet. Das nach dem Trocknen vorliegende Produkt wird bei einer Temperatur von vorzugsweise 500° C für fünf Stunden kalziniert, anschließend gemahlen. Die dabei erzeugte Korngröße liegt zweckmäßig in einem Bereich von 1 µm.

Das Mahlen liefert ein Pulver, bestehend aus Zinndioxid (SnO₂) mit Anteilen von 0,01 Mol% Tantaloxid (Ta₂O₅), 1,2 Mol% Palladium (Pd), sowie 0,1 Mol% Magnesiumoxid (MgO). Das Tantaloxid (Ta₂O₅) dient dabei zur Erhöhung der Leitfähigkeit, das Palladium (Pd) wirkt als Diffusionssperre für die nachfolgend erfolgende Oberflächenbeschichtung der Pulverkörner, das Magnesiumoxid (MgO) dient zur Steuerung des Zusammensinterungsgrades, insbesondere verhindert es ein zu starkes Zusammensintern der Körner während des Herstellungsprozesses. Die Pulverkörner besitzen eine Kristallit-Feinstruktur, die Kristallitgröße beträgt ca. 20 bis 80 nm.

Nachfolgend wird das Pulver oberflächenbeschichtet. In einem ersten Schritt werden hierfür 0,4 Mol% Gold (Au) in Form von in Wasser gelöster Goldsäure (HAuCL₄) auf das Pulver gegeben, wobei ein Schlicker entsteht. Dieser wird getrocknet. Alle in dem Schlicker vorhandene Goldsäure wird anschließend durch thermische Behandlung in einem Drehofen, vorzugsweise bei ca. 200° C, im Wasserstrom mit 10 % H₂ in N₂ zu Gold reduziert. An die Goldbeschichtung schließt sich in einem zweiten Schritt eine Palladiumbeschichtung an. Hierfür werden 0,2 Mol% Palladium (Pd) in Form von in Wasser gelösten Palladium-Nitrat auf das zuvor mit Gold beschichtete Pulver gegeben. Es entsteht wiederum ein Schlicker, welcher getrocknet wird. Der getrocknete Schlicker wird bei einer Temperatur von vorzugsweise ca. 200° C in einem Drehofen und im Luftstrom thermisch behandelt. Dabei wird das im Schlicker vorhandene Palladium (Pd) in Palladiumoxid (PdO) überführt, es entstehen palladiumbeschichtete Körner.

Aus dem beschichteten Pulver wird zweckmäßig mit Butylcarbitol und Ethylzellulose eine Siebdruckpaste hergestellt. Sie wird bei der Herstellung eines Sensors als sensitive Schicht 3 auf das Substrat 1 aufgebracht. Figur 6 veranschaulicht die Struktur einer solchen auf ein Substrat 1 aufgebrachten sensitiven Schicht 3. Sie baut sich aus aneinanderliegenden Körnern 15 auf, deren Oberflächen mit einer Schicht 11 ummantelt sind. Die Körner 15 ihrerseits bauen sich aus einzelnen Kristalliten 10 auf.

Die mit der sensitiven Schicht 3 bedruckten Sensoren werden bei zweckmäßig 700° C ca. drei Stunden gesintert. Dabei wandelt sich das in den die Körner 15 umgebenden Mantelschichten 11 vorhandene Paladiumdioxid (PdO) in Paladium (Pd) um und legiert mit dem in den Mantelschichten 11 ebenfalls vorhandenen Gold. Die zunächst einzelnen Zinnoxidkörner 15 verbinden sich beim Sintern zu Strukturverbänden 12, die ursprünglich die Körner 15 einzeln umhüllenden Mantelschichten 11 wachsen zu einer die Oberflächen der Strukturverbände 12 bedeckenden Metallbeschichtung 14 in Form kleiner Cluster zusammen. Figur 7 zeigt die Struktur einer sensitiven Schicht 3 nach dem Sintern.

Es wurde festgestellt, daß Sensoren mit einer sensitiven Schicht aus einem gemäß dem erfindungsgemäßen Verfahren hergestellten Material bei Beaufschlagung mit 40 vpm Kohlenmonoxid (CO) in Luft mit einer, auf 20° Grad bezogenen, relativen Feuchte von 60 % bei einer Betriebstemperatur von ca. 300° C einen um den Faktor 3 bis 5 verringerten elektrischen Widerstand gegenüber dem Wert in reiner Luft aufweisen. Bei zusätzlicher Beaufschlagung mit einem Prüfgas mit 1 bis 5 vpm Stickstoffdioxid (NO₂) ergab sich bei 40 vpm Kohlenmonoxid (CO) und 1 - 5 vpm Stickstoffdioxid (NO₂) eine Erhöhung des elektrischen Widerstandes um weniger als 30%.

## Patentansprüche

1. Sensor zum Nachweisen von brennbaren Gasen in einem Prüfgas, mit einer auf einem isolierenden, keramischen Substrat aufgebrachten sensitiven Schicht auf der Basis eines halbleitenden Metalloxids, deren elektrischer Widerstand eine Aussage über die Konzentration von brennbaren Gasen in einem Prüfgas liefert, wobei die sensitive Schicht mit mindestens zwei Leiterbahnen elektrisch verbunden ist, **dadurch gekennzeichnet, dass** die sensitive Schicht (3) einen Verbund (12) von zusammengesinterten Körnern (15) des halbleitenden Metalloxids aufweist und die Oberfläche des Verbundes (12) mit Gold und/oder einer Goldlegierung beschichtet ist.

2. Sensor nach Anspruch 1, **dadurch gekennzeichnet, daß** die Goldlegierung aus 66 Mol% Gold und 33 Mol% Palladium (Pd) besteht.

3. Sensor nach Anspruch 1, **dadurch gekennzeichnet, daß** die Goldlegierung aus Gold und einem oder mehreren Edelmetallen der Gruppe Palladium (Pd), Platin (Pt), Rhodium (Rh), Iridium (IR) Osmium (Os) oder Silber (Ag) besteht.

4. Sensor nach Anspruch 1, **dadurch gekennzeichnet, daß** die Legierung aus Gold mit einem Anteil von einem anderen Metall mit höherem Schmelzpunkt besteht.

5. Sensor nach Anspruch 1, **dadurch gekennzeichnet, daß** der Anteil des Goldes und/oder der Goldlegierung bezogen auf das halbleitende Metalloxid 0,3 bis 3 Mol%, vorzugsweise 0,6 Mol% beträgt.

6. Sensor nach Anspruch 1, **dadurch gekennzeichnet, daß** das halbleitende Metalloxid eine homogene Dotierung mit Palladium von 0 bis zu 3 Mol%, vorzugsweise 1,2 Mol% aufweist.

7. Sensor nach Anspruch 1, **dadurch gekennzeichnet, daß** das halbleitende Metalloxid Zinnoxid (SnO₂) ist.

8. Sensor nach Anspruch 1, **dadurch gekennzeichnet, daß** das halbleitende Metalloxid Indiumoxid (In₂O₃), Titanoxid (TiO₂) oder ein anderes n-halbleitendes Metalloxid oder Metallmischoxid ist.

9. Sensor nach Anspruch 1, **dadurch gekennzeichnet, daß** das halbleitende Metalloxid mit einer Konzentration von 0,001 bis 0,05 Mol%, vorzugsweise 0,005 bis 0,015 Mol% bezogen auf das halbleitende Metalloxid mit Tantaloxid (Ta₂O₅) oder Nioboxid (Nb₂O₅) dotiert ist.

10. Sensor nach Anspruch 1, **dadurch gekennzeichnet, daß** das halbleitende Metalloxid in einer Konzentration von 0,03 bis 0,3 Mol%, vorzugsweise 0,1 Mol% mit einem 2- oder 3-wertigen Element der Erdalkali oder der seltenen Erden versetzt ist.

11. Verfahren zum Herstellen einer sensitiven Schicht für Gassensoren, welche den Anteil eines brennbaren Gases in einem Prüfgas durch Auswertung des elektrischen Widerstands der sensitiven Schicht bestimmen, **gekennzeichnet durch** folgende Schritte:
- Herstellen eines Pulvers (15) auf der Basis eines halbleitenden Metalloxids mit Anteilen von einem die Leitfähigkeit erhöhenden Oxid, von Palladium sowie einem 2- oder 3-wertigen Element der Erdalkali oder der seltenen Erden,
- Beschichten der Pulverkörner (15) mit Gold, und/oder
- einem oder mehreren Edelmetallen der Gruppe Paladium (Pd), Platin (Pt), Rhodium (Rh), Iridium (Ir), Osmium (Os),
- Herstellen einer Paste aus den beschichteten Pulverkörnern
- Aufbringen der Paste auf das Sensorsubstrat (1) als sensitive Schicht (3),
- Sintern der auf dem Substrat (1) angeordneten sensitiven Schicht (3) bei 500° bis 1000° C, vorzugsweise 700° C.

12. Verfahren nach Anspruch 11, **dadurch gekennzeichnet, daß** das Herstellen des Pulvers folgende Schritte enthält:
- Mischen von Zinntetrachlorid (SnCl₄) und Tantalpentachlorid (TaCl₅) in Salzsäure (HCl)
- Lösen der Mischung in Wasser
- Ausfällen von Zinnoxid (SnO₂) aus der Lösung
- Sedimentieren des Ausfällungsproduktes
- Lösen der Sedimente in Wasser
- Trocknen der Lösung
- Kalzinieren des Trocknungsproduktes
- Mahlen des kalzinierten Produktes

13. Verfahren nach Anspruch 11, **dadurch gekennzeichnet, daß** die Pulverkörner zunächst mit Gold, anschließend mit Paladium beschichtet werden.

14. Verfahren nach Anspruch 11, **dadurch gekennzeichnet, daß** das Beschichten der Pulverkörner (15) mit Gold (Au) folgende Schritte aufweist:
- Herstellen eines Schlickers durch Zugabe von in Wasser gelöster Goldsäure zu dem Pulver,
- Trocknen des Schlickers,
- thermische Behandlung des Schlickers im Wasserstrom

15. Verfahren nach Anspruch 11, **dadurch gekennzeichnet, daß** das Beschichten der Pulverkörner (15) mit Palladium (Pd) folgende Schritte aufweist:
- Herstellen eines Schlickers durch Zugabe von in Wasser gelösten Palladium-Nitrat (Pd(NO₃)₂) zu dem goldbeschichteten Pulver (15),
- Trocknen des Schlickers
- thermische Behandlung des Schlickers im Luftstrom

16. Verfahren nach Anspruch 11, **dadurch gekennzeichnet, daß** das halbleitende Metalloxid Zinnoxid (SnO₂) ist.

17. Verfahren nach Anspruch 11, **dadurch gekennzeichnet, daß** das die Leitfähigkeit erhöhende Oxid Tantaloxid (Ta₂O₅) ist.

18. Verfahren nach Anspruch 11, **dadurch gekennzeichnet, daß** als Element der Erdalkali Magnesiumoxid (MgO) verwendet wird.

## Claims

1. Sensor for detecting flammable gases in a test gas, having a sensitive layer which is applied to an insulating, ceramic substrate and is based on a semiconducting metal oxide, the electrical resistance of which provides an indication of the concentration of flammable gases in a test gas, the sensitive layer being electrically connected to at least two conductor tracks, **characterized in that** the sensitive layer (3) has an assembly (12) of grains (15) of the semiconducting metal oxide which have sintered together, and the surface of the assembly (12) is coated with gold and/or a gold alloy.

2. Sensor according to Claim 1, **characterized in that** the gold alloy comprises 66 mol% of gold and 33 mol% of palladium (Pd).

3. Sensor according to Claim 1, **characterized in that** the gold alloy comprises gold and one or more precious metals selected from the group consisting of palladium (Pd), platinum (Pt), rhodium (Rh), iridium (Ir), osmium (Os) and silver (Ag).

4. Sensor according to Claim 1, **characterized in that** the alloy comprises gold with a proportion of another metal with a higher melting point.

5. Sensor according to Claim 1, **characterized in that** the proportion of gold and/or of the gold alloy based on the semiconducting metal oxide is 0.3 to 3 mol%, preferably 0.6 mol%.

6. Sensor according to Claim 1, **characterized in that** the semiconducting metal oxide is homogeneously doped with 0 to 3 mol%, preferably 1.2 mol%, of palladium.

7. Sensor according to Claim 1, **characterized in that** the semiconducting metal oxide is tin oxide (SnO₂).

8. Sensor according to Claim 1, **characterized in that** the semiconducting metal oxide is indium oxide (In₂O₃), titanium oxide (TiO₂) or another n-type semiconducting metal oxide or mixed metal oxide.

9. Sensor according to Claim 1, **characterized in that** the semiconducting metal oxide is doped with a concentration of 0.001 to 0.05 mol%, preferably 0.005 to 0.015 mol%, based on the semiconducting metal oxide, of tantalum oxide (Ta₂O₅) or niobium oxide (Nb₂O₅).

10. Sensor according to Claim 1, **characterized in that** the semiconducting metal oxide is mixed with a divalent or trivalent element from the alkaline earth metals or the rare earths, in a concentration of 0.03 to 0.3 mol%, preferably 0.1 mol%.

11. Process for producing a sensitive layer for gas sensors which determine the proportion of a flammable gas in a test gas by evaluating the electrical resistance of the sensitive layer, **characterized by** the following steps:
- producing a powder (15) based on a semiconducting metal oxide with proportions of an oxide which increases the conductivity, of palladium and of a divalent or trivalent element selected from the alkaline earth metals or the rare earths,
- coating the powder grains (15) with gold, and/or
- one or more precious metals selected from the group consisting of palladium (Pd), platinum (Pt), rhodium (Rh), Iridium (Ir), osmium (Os),
- producing a paste from the coated powder grains,
- applying the paste to the sensor substrate (1) as sensitive layer (3),
- sintering the sensitive layer (3) arranged on the substrate (1) at 500°C to 1000°C, preferably 700°C.

12. Process according to Claim 11, **characterized in that** the production of the powder includes the following steps:
- mixing tin tetrachloride (SnCl₄) and tantalum pentachloride (TaCl₅) in hydrochloric acid (HCl),
- dissolving the mixture in water,
- precipitating tin oxide (SnO₂) out of the solution,
- sedimenting the precipitated product,
- dissolving the sediments in water,
- drying the solution,
- calcining the dried product,
- milling the calcined product.

13. Process according to Claim 11, **characterized in that** the powder grains are coated firstly with gold, then with palladium.

14. Process according to Claim 11, **characterized in that** the coating of the powder grains (15) with gold (Au) involves the following steps:
- producing a slip by adding chloroauric acid dissolved in water to the powder,
- drying the slip,
- thermally treating the slip in a stream of water.

15. Process according to Claim 11, **characterized in that** the coating of the powder grains (15) with palladium (Pd) involves the following steps:
- producing a slip by adding palladium nitrate (Pd(NO₃)₂) dissolved in water to the gold-coated powder (15),
- drying the slip,
- thermally treating the slip in a stream of air.

16. Process according to Claim 11, **characterized in that** the semiconducting metal oxide is tin oxide (SnO₂).

17. Process according to Claim 11, **characterized in that** the oxide which increases the conductivity is tantalum oxide (Ta₂O₅).

18. Process according to Claim 11, **characterized in that** the alkaline earth metal element used is magnesium oxide (MgO).

## Revendications

1. Détecteur pour détecter des gaz inflammables dans un gaz échantillon comprenant une couche sensible appliquée sur un substrat céramique isolant, cette couche étant à base d'un oxyde métallique semi-conducteur dont la résistance électrique donne une information relative à la concentration des gaz combustibles dans un gaz échantillon, la couche sensible étant reliée électriquement à au moins deux chemins conducteurs,
**caractérisé en ce que**
la couche sensible (3) est une combinaison (12) de grains (15) réunis par frittage, de l'oxyde métallique semi-conducteur et la surface de la combinaison (12) est revêtue d'or ou/et d'un alliage d'or.

2. Détecteur selon la revendication 1,
**caractérisé en ce que**
l'alliage d'or se compose de 66 % molaire d'or et de 33 % molaire de palladium (Pd).

3. Détecteur selon la revendication 1,
**caractérisé en ce que**
l'alliage d'or consiste en de l'or et en un ou plusieurs métaux nobles du groupe du palladium (Pd), platine (Pt), rhodium (Rh), iridium (IR), osmium (Os), argent (Ag).

4. Détecteur selon la revendication 1,
**caractérisé en ce que**
l'alliage est en or avec une partie d'un autre métal ayant un point de fusion plus élevé.

5. Détecteur selon la revendication 1,
**caractérisé en ce que**
la partie d'or et/ou de l'alliage d'or rapportée à l'oxyde métallique semi-conducteur représente de 0,3 à 3 % molaire de préférence 0,6 % molaire.

6. Détecteur selon la revendication 1,
**caractérisé en ce que**
l'oxyde métallique semi-conducteur comporte un dopage homogène de palladium compris entre 0 et 3 % molaire et de préférence 1,2% molaire.

7. Détecteur selon la revendication 1,
**caractérisé en ce que**
l'oxyde métallique semi-conducteur est de l'oxyde de zinc SnO₂.

8. Détecteur selon la revendication 1,
**caractérisé en ce que**
l'oxyde métallique semi-conducteur est de l'oxyde d'indium (In₂O₃), de l'oxyde de titane (TiO₂) ou un autre oxyde métallique semi-conducteur de type N ou un mélange d'oxydes métalliques.

9. Détecteur selon la revendication 1,
**caractérisé en ce que**
l'oxyde métallique semi-conducteur est dopé avec une concentration de 0,001 jusqu'à 0,05 % molaire de préférence 0,005 jusqu'à 0,015 % molaire par rapport à l'oxyde métallique semi-conducteur avec de l'oxyde de tantale (Ta₂O₅) ou de l'oxyde de niobium (Nb₂O₅).

10. Détecteur selon la revendication 1,
**caractérisé en ce que**
l'oxyde métallique semi-conducteur est présent dans une concentration de 0,03 à 0,3 % molaire de préférence 0,1 % molaire avec un élément de balance de 2 ou 3 des alcalino terreux ou des terres rares.

11. Procédé de fabrication d'une couche sensible pour des détecteurs de gaz pour déterminer la teneur d'un gaz combustible dans un gaz échantillon par l'exploitation de la résistance électrique de la couche sensible,
**caractérisé par** les étapes suivantes :
- on fabrique une poudre (15) à base d'un oxyde métallique semi-conducteur avec des parties d'un oxyde à conductivité augmentée, de palladium ou d'un élément de valence 2 ou 3 des alcalino-terreux ou des terres rares.
- on revêt de divers revêtements les grains de poudre (15) avec de l'air et/ou
- un ou plusieurs métaux nobles du groupe palladium (Pd), platine (Pt), rhodium (Rh), iridium (Ir), osmium (Os),
- on réalise une pâte à partir des grains de poudre munis de leur revêtement,
- on applique la pâte sur le substrat de capteur (1) comme couche sensible (3) et
- on fritte la couche sensible (3) sur le substrat (1) à une température comprise entre 500°C et 1000°C, de préférence 700°C.

12. Procédé selon la revendication 11,
**caractérisé en ce que**
la fabrication de la poudre comprend les étapes suivantes :
- mélange du tétra chlorure de zinc (ZnCl₄) et du pentachlorure de tantale (TaCl₅) dans de l'acide chlorhydrique (HCl),
- on dissout le mélange dans l'eau,
- on précipite l'oxyde de zinc (ZnO₂) de la solution,
- on fait sédimenter le précipité,
- on dissout les sédiments dans l'eau,
- on sèche la solution,
- on calcine le produit sec,
- on broie le produit calciné.

13. Procédé selon la revendication 11,
**caractérisé en ce qu'**
on revêt les grains de poudre tout d'abord avec de l'or puis avec du palladium.

14. Procédé selon la revendication 11,
**caractérisé en ce qu'**
on revêt les grains de poudre (15) avec de l'or (Au) on appliquant les étapes de procédés suivantes :
- on fabrique une boue en ajoutant des acides d'or dissous dans l'eau à la poudre,
- on fait sécher la boue, et
- on traite par voie thermique la boue dans un courant d'eau.

15. Procédé selon la revendication 11,
**caractérisé en ce que**
le revêtement des grains de poudre (15) avec du palladium (Pd) comprend les étapes suivantes :
- on fabrique une boue en ajoutant du nitrate de palladium (Pd (NO₃)₂) dissoute dans l'eau à la poudre revêtue d'or (15),
- on fait sécher la boue,
- on applique un traitement thermique à la boue dans une veine d'air.

16. Procédé selon la revendication 11,
**caractérisé en ce que**
l'oxyde métallique semi-conducteur est de l'oxyde de zinc (SNO₂).

17. Procédé selon la revendication 11,
**caractérisé en ce que**
l'oxyde qui augmente la conductivité est l'oxyde de tantale (Ta₂O5).

18. Procédé selon la revendication 11,
**caractérisé en ce qu'**
on utilise comme élément alcalino-terreux, de l'oxyde de magnésium (MgO).
